# EUROPEAN PATENT APPLICATION

(11) **EP 1 919 113 A2**
(43) Date of publication of application: **07.05.2008**
(21) Application number: 07021403.6
(22) Date of filing: 02.11.2007

(54) **Time-shifted broadcast delivery**

(30) Priority: 06.11.2006 US 556898
(71) Applicant: Nortel Networks Limited, St Laurent, Québec H4S 2A9 (CA)
(72) Inventor: Goodwill, Dominic, Kanata Ontario K2H 8E9 (CA); Frigui, Imed, Ottawa Ontario K2C 4B2 (CA); Nannra, Anoop, Orleans Ontario K4A 4M1 (CA)
(74) Representative: Boyce, Conor

(57) **Abstract**

The present invention provides a network based time-shifting architecture where broadcast content is replicated and delivered toward subscribers at different times in different content streams. In operation, a content source delivers unshifted content over a network to a media server, which replicates the unshifted content to provide multiple content blocks. Each content block represents a time-shifted content block of the unshifted content, and as such each time-shifted content block will have essentially the same content. At different times, each time-shifted content block is delivered over a transmission network toward the same or different subscribers. In one embodiment, the time-shifted content blocks are delivered directly or through an encryption function to a multicast server, which controls delivery of the different time-shifted content blocks to television clients of the subscribers.

## Description

### Field of the Invention

The present invention relates to delivering streaming content, and in particular to facilitating time-shifted delivery of such content.

### Background of the Invention

In many instances, television service providers need to delay content delivery for one reason or another. For instance, national television broadcasters may provide a live content feed in one time zone and delay that content feed for delivery in other time zones, such that the content is delivered at the same time in the different time zones. In other instances, content may be delivered with different delays to the same subscribers in a given time zone. As an example, a cable or satellite television service provider may present the same program on different channels with different start times. The program may start every half hour, such that subscribers can choose when to start watching the program as well as jump one half hour forward or one half hour back during the playback of the program by changing channels. As such, the programs are being provided in parallel over different channels in a time-shifted fashion.

Time-shifting generally requires the television service provider to provide the time-shifted content from the content source to the subscriber. Providing the time-shifted content all the way from the source to the subscriber is very inefficient for both the service provider's sourcing equipment and the content delivery infrastructure of the delivery network.

As television service providers are moving towards delivering content over packet-based networks, the number of applications competing for network resources intensifies. As such, there is a need to conserve resources of the service provider and the communication network, yet still provide the same or better services to subscribers. Accordingly, there is a need for a technique to deliver time-shifted content to the same or different subscribers in the same or different time zones in a more efficient manner.

### Summary of the Invention

The present invention provides a network based time-shifting architecture where broadcast content is replicated and delivered toward subscribers at different times in different content streams. In operation, a content source delivers unshifted content over a network to a media server, which replicates the unshifted content to provide multiple content blocks. Each content block represents a time-shifted content block of the unshifted content, and as such each time-shifted content block will have essentially the same content. At different times, each time-shifted content block is delivered over a transmission network toward the same or different subscribers. In one embodiment, the time-shifted content blocks are delivered directly or through an encryption function to a multicast server, which controls delivery of the different time-shifted content blocks to television clients of the subscribers. Different time-shifted content blocks may be streamed to subscriber equipment on different channels, which are selectable by the subscribers. As such, the same broadcast content is made available to the same or different subscribers at different times without requiring the content source to provide the broadcast content multiple times.

As an example, a content block of a given broadcast program may be made available to subscribers in different time zones at different times. As such, primetime programming may be time-shifted and provided consistently throughout numerous time zones. Alternatively, the content block may be made available to the same subscribers at different times. For instance, the content block may be available on four channels, wherein the content is provided in real time on a first channel, with a 15 minute delay on a second channel, with a 30 minute delay on a third channel, and with an hour delay on a fourth channel. After the first hour, the content for a content block that is longer than an hour is being provided in a time-shifted manner on four different channels.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.
Figure 1 is a block representation of a communication environment according to one embodiment of the present invention.
Figures 2A and 2B are a communication flow illustrating the operation of the present invention in a video-on-demand television architecture according to one embodiment of the present invention.
Figure 3 is a block representation of a media server according to one embodiment of the present invention.
Figure 4 is a block representation of an entitlement server according to one embodiment of the present invention.
Figure 5 is a block representation of a multicast server according to one embodiment of the present invention.
Figure 6 is a block representation of a middleware server according to one embodiment of the present invention.

### Detailed Description of the Preferred Embodiments

The present invention provides a network based time-shifting architecture where broadcast content is replicated and delivered toward subscribers at different times in different content streams. In operation, a content source delivers unshifted content over a network to a media server, which replicates the unshifted content to provide multiple content blocks. Each content block represents a time-shifted content block of the unshifted content, and as such each time-shifted content block will have essentially the same content. At different times, each time-shifted content block is delivered over a transmission network toward the same or different subscribers. In one embodiment, the time-shifted content blocks are delivered directly or through an encryption function to a multicast server, which controls delivery of the different time-shifted content blocks to television clients of the subscribers. Different time-shifted content blocks may be streamed to subscriber equipment on different channels, which are selectable by the subscribers. As such, the same broadcast content is made available to the same or different subscribers at different times without requiring the content source to provide the broadcast content multiple times.

As an example, a content block of a given broadcast program may be made available to subscribers in different time zones at different times. As such, primetime programming may be time-shifted and provided consistently throughout numerous time zones. Alternatively, the content block may be made available to the same subscribers at different times. For instance, the content block may be available on four channels, wherein the content is provided in real time on a first channel, with a 15 minute delay on a second channel, with a 30 minute delay on a third channel, and with an hour delay on a fourth channel. After the first hour, the content for a content block that is longer than an hour is being provided in a time-shifted manner on four different channels.

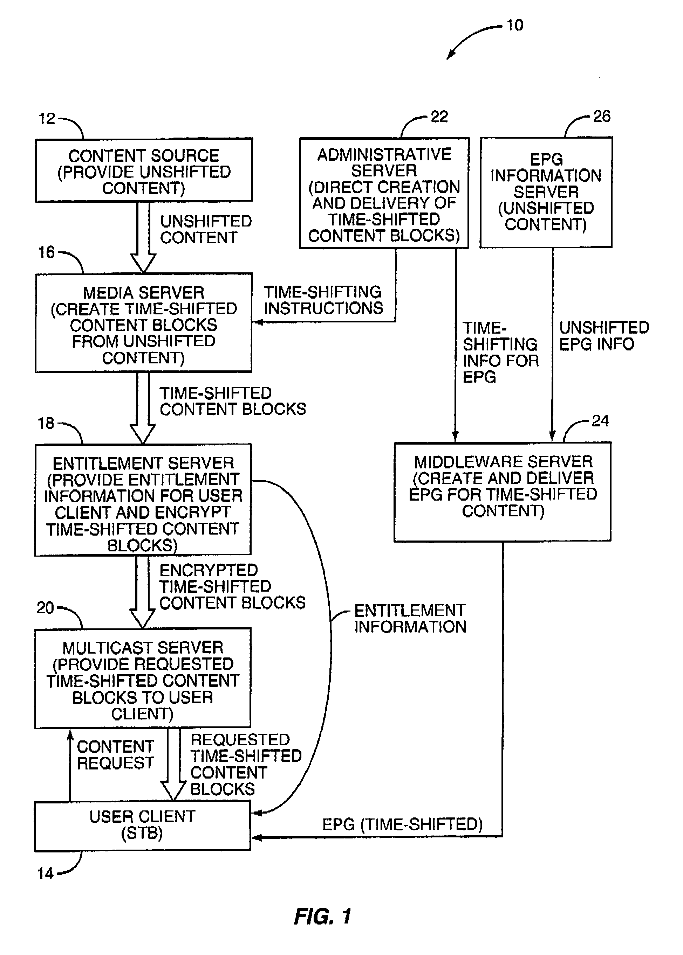

With reference to Figure 1, the network architecture 10 for delivering time-shifted content is illustrated. Although various types of streaming content may be delivered using the concepts of the present invention, the following description describes delivering broadcast content, which represents various types of television programming, over a packet-based delivery architecture, such as those used for providing Internet Protocol-based television services (IPTV).

The architecture 10 supports delivery of streaming content from a content source 12 to a user client 14, which may represent various types of equipment in a customer premises of a subscriber. The user client 14 may represent a set-top box (STB) or like function provided in the subscriber's computer, telephony, wireless, audio, or video equipment. The streaming content may take various forms and may be predominantly audio, video, or a combination thereof. As noted, the present invention is particularly applicable to providing streaming television content to the user client 14.

The content source 12 will stream unshifted content to a media server 16. From the unshifted content, the media server 16 will create time-shifted content blocks. The media server 16 will generally store and replicate the unshifted content to form multiple time-shifted content blocks. Each time-shifted content block will be streamed towards the user client 14 at different times according to a predefined schedule.

In the illustrated embodiment, the different time-shifted content blocks are streamed toward the user client 14 in different streams, which are associated with different channels. For subscription-based services, the time-shifted content blocks are delivered to an entitlement server 18, which operates to ensure subscribers only have access to content that they are authorized to receive. The entitlement server 18 may also encrypt content being delivered towards the user client 14.

In the illustrated embodiment, the entitlement server 18 will provide entitlement information for the user client 14 and encrypt the time-shifted content blocks in association with the entitlement information. In particular, the entitlement information provided to the user client 14 will enable the user client 14 to decrypt the content that was encrypted by the entitlement server 18. Those skilled in the art will recognize other information exchanged between the entitlement server 18 and the user client 14 to enable authorized delivery of content to the user client 14.

Each of the encrypted time-shifted content blocks is delivered to a multicast server 20, which will provide the time-shifted content blocks to the user client 14 automatically or upon request. In an effort to save bandwidth through the access network connecting the multicast server 20 to the user client 14, the number of content streams from the multicast server 20 to the user client 14 is generally limited. As such, the user client 14 will generally send a content request to the multicast server 20, which will respond by providing a requested time-shifted content block to the user client 14. As such, not all of the time-shifted content blocks are sent to the user client 14 at any given time. However, those skilled in the art will recognize that multiple content blocks, whether requested or not, may be sent to the user client 14 at the same time to facilitate rapid channel changes and the like.

Although only one user client 14 is illustrated, the multicast server 20 may serve numerous user clients 14 in the same or different time zones and support the different user clients 14 in the different time zones in different ways. Further, multiple time-shifted channels may be made available to a given user client 14. Alternatively, only one time-shifted channel may be provided to user client 14 in a given time zone, wherein different user clients 14 in different time zones will receive different time-shifted channels. Those skilled in the art will recognize the tremendous flexibility in configuring and controlling the delivery of time-shifted content with the present invention.

Continuing with Figure 1, an administrative server 22 may act as a central control point for the time-shifting operation provided by the present invention. The administrative server 22 may direct creation and delivery of the time-shifted content blocks by sending time-shifting instructions to the media server 16 to control how many time-shifted content blocks are created, as well as the delay or delivery times associated with the various time-shifted content blocks. The administrative server 22 may also send time-shifting information to a middleware server 24 to assist in creating electronic programming guides (EPGs). The middleware server 24 may process the time-shifting information provided from the administrative server 22 as well as unshifted EPG information provided from an EPG information server 26 to create an EPG for the user client 14. The EPG will take into consideration the availability of the time-shifted channels and provide traditional scheduling and content information for the EPG. The middleware server 24 will generally provide the updated EPG, which includes the time-shifted information, to the user client 14. The user client 14 may use the EPG to identify time-shifted programming and corresponding channels, as well as request a programming channel corresponding to a time-shifted content block.

In the above description, the media server 16 will present the different time-shifted content blocks on different channels to be made available to the user client 14. The entitlement server 18 and the multicast server 20 may not be aware that the different channels are carrying essentially the same content with different delays. With this type of implementation, significant portions of the network architecture 10 can operate without modification when the present invention is employed.

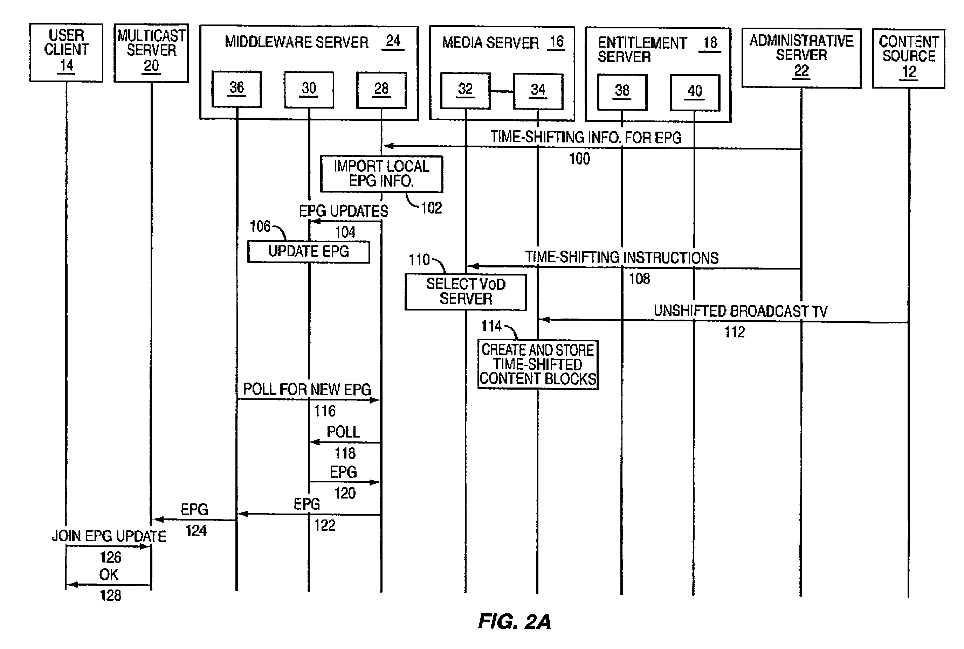

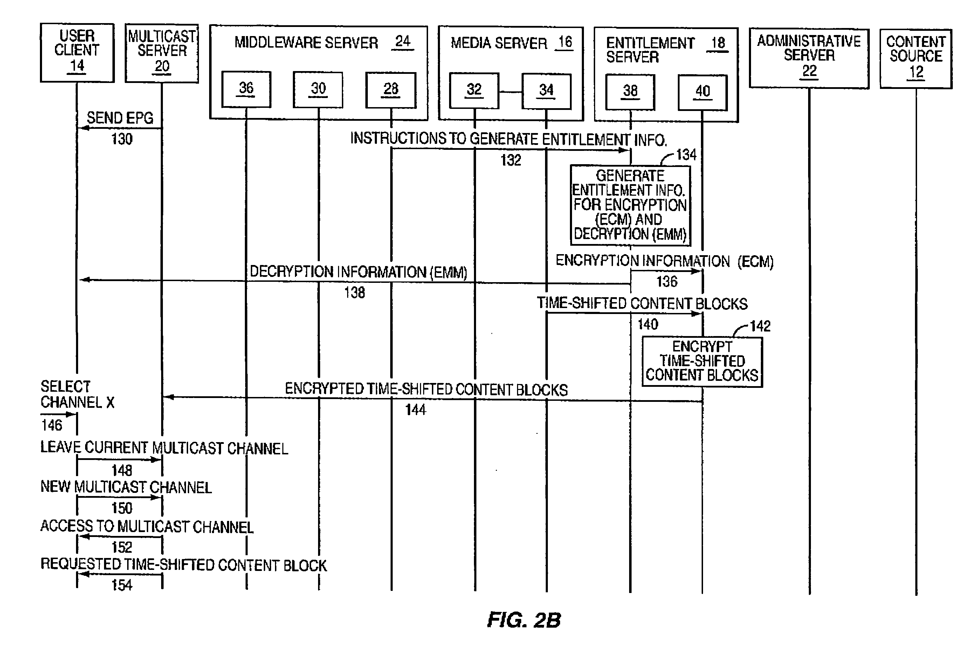

With reference to Figures 2A and 2B, a communication flow is provided for an embodiment where the present invention is employed in an existing video-on-demand (VoD) architecture. Although the processes illustrated in the communication flow may occur simultaneously or at different times, the illustrated process begins by updating EPG information to take into consideration the time-shifting aspect provided by the present invention. Initially, the administrative server 22 will send time-shifting information for the EPG to one or more EPG applications 28 of the middleware server 24 (step 100). The EPG application 28 will import local EPG information and process the time-shifting information for the EPG to provide EPG updates to an associated database 30 (steps 102 and 104). For example, an appropriate time offset may be added to the time parameters of the EPG records in the database 30 for programs, channels, or other content that is time-shifted. The database 30 will update the EPG to provide the EPG to the user client 14 accordingly (step 106). At this point, the EPG will include the normal (local) EPG information as well as the time-shifted EPG information, such that when the EPG is presented to a subscriber, different channels may be selected to receive different programming associated with a given time-shifted content block.

Meanwhile, the administrative server 22 will also send time-shifting instructions to a video-on-demand (VoD) controller 32 associated with the media server 16 (step 108). The VoD controller 32 will select a VoD server 34 to employ for time-shifting broadcast television content (step 110). As such, the VoD server 34 will receive unshifted broadcast television content from the content source 12 (step 112). The VoD server 34 will create and store numerous time-shifted content blocks based on the unshifted broadcast television content (step 114). Although not specifically illustrated, the VoD controller 32 will instruct the VoD server 34 to provide the time-shifting operation as well as identify how many time-shifted content blocks to create, identify the start and end time for capturing each content block, and identify the relative delay or delivery time associated with each time-shifted content block. As this point, the EPG is updated for the time-shifting provided by the VoD server 34 of the media server 16, and the VoD server 34 is operating to create and provide the corresponding time-shifted content blocks.

The middleware server 24 may have an EPG dispatch function 36, which operates to deliver appropriate EPG information to the user client 14 via the multicast server 20. In this embodiment, the EPG dispatch function 36 will periodically poll for new EPG information by sending an appropriate request to the EPG application 28 (step 116), which will poll the database 30 for the EPG information (step 118). The database 30 will provide the EPG information to the EPG application 28 (step 120), which will provide the EPG information to the EPG dispatch function 36 (step 122). The EPG dispatch function 36 will provide the EPG information to the multicast server 20 (step 124), which will make the EPG information available on a defined EPG channel.

At this point, the EPG information is available for delivery to the user client 14. The user client 14 may obtain the EPG information using numerous techniques. As illustrated, the user client 14 is configured to send a Join EPG Update message to the multicast server 20 to effectively join a multicast group that is being provided the EPG information (step 126). The multicast server 20 will determine whether or not to allow the user client 14 to join the multicast group for the EPG information, and if authorized, the multicast server 20 will send an OK message to the user client 14 to communicate that the request of the user client 14 was approved (step 128). The OK message may include an address to which the EPG information is being delivered to enable the user client 14 to receive the EPG information. The user client 14 has now received or is receiving EPG information sufficient to create an EPG, which identifies the various channels by which the time-shifted content blocks corresponding to the broadcast television content may be received (step 130).

The EPG application 28 of the middleware server 24 may also send instructions to generate entitlement information to an entitlement server (ES) controller 38 (step 132). The ES controller 38 will respond by generating entitlement information and keys for encryption and decryption of the time-shifted content blocks (step 134). The encryption information, such as encryption keys and associated control information, is sent to an encryption function 40 of the entitlement server 18 (step 136). The decryption information, as sent to the user client 14 (step 138), may contain Entitlement Management Messages (EMMs) that represent the entitlement information and Entitlement Control Messages (ECM) that represent the decryption keys. In essence, the encryption information provides the necessary information, such as encryption keys, for the encryption function 40 of the entitlement server 18 to encrypt the time-shifted content blocks to be delivered from the VoD server 34 of the media server 16 to the multicast server 20, and then to the user client 14. The decryption information provided to the user client 14 enables the user client 14 to decrypt encrypted time-shifted content blocks received via the multicast server 20 and present corresponding content to the subscriber.

Once the encryption function 40 of the entitlement server 18 is armed with the entitlement information for encryption, the time-shifted content blocks are delivered as scheduled to the multicast server 20 through the entitlement server 18. In particular, the time-shifted content blocks are sent from the VoD server 34 to the encryption function 40 (step 140), which will encrypt the time-shifted content blocks using the encryption information (step 142), and deliver the corresponding encrypted time-shifted content blocks to the multicast server 20 (step 144). When a subscriber selects a channel (X) corresponding to one of the time-shifted content blocks, an appropriate instruction is provided to the user client 14 (step 146). The user client 14 will provide a message instructing the multicast server 20 to leave the current multicast channel (step 148) and join a new multicast channel corresponding to the time-shifted content blocks (step 150). The multicast sever 20 will process these requests, and if authorized, will grant access to the multicast channel and provide a message indicating the same to the user client 14 (step 152). At this point, the requested time-shifted content block is provided to the user client 14 by the multicast server 20 (step 154). The user client 14 will use the entitlement information for decryption to decrypt the time-shifted content block and deliver the content to the subscriber. To join a multicast session, the user client 14 generally needs to receive addressing information associated with the multicast session and will use the addressing information to identify packets associated with the session. The packets that are associated with the session are received and processed as described above. Numerous user clients 14 may join any given multicast session, such that each session may represent a channel that can be viewed by any number of subscribers. Since the content is time-shifted and not controlled by the user clients 14, multicast sessions are joined in progress in light of the time-shifting.

Given the large number of subscribers that need to be served in many broadcast television environments, there may be multiple media servers 16, entitlement servers 18, and multicast servers 20 working in combination to support the needs of subscribers. Further, different content may be supported by different media servers 16 or multicast servers 20. As an alternative, different user clients 14 may be supported by certain media servers 16 or multicast servers 20. Those skilled in the art will recognize various configurations for delivering broadcast television content and other streaming media content to subscribers according to the concepts of the present invention.

In an alternative embodiment, the media server 16 may set up unicast streams for delivery of the time-shifted content to individual user clients 14. Any user client 14 may use different unicast streams to receive different content streams, which represent the different time-shifted content streams, from the media server 16. Instead of joining a multicast stream as described above, individual unicast streams for each user client 14 are created when requested by each user client 14. The unicast streams allow the user clients 14 to receive a particular content stream for corresponding time-shifted content. The user clients 14 will receive the time-shifted content in progress and will not have control of content delivery. The media server 16 will maintain control of content delivery. The unicast streams are used only as a delivery mechanism. In this embodiment, the media server 16 may provide entitlement information and encryption prior to delivery of content to the user client 14.

The original unshifted content may be broken into consecutive time-shifted content blocks in a variety of ways. The time-shifted content blocks for a first unshifted content may be staggered with respect to time-shifted content blocks for another unshifted content. As such, time-shifted content blocks corresponding to different unshifted content channels or the like may start and stop at different times to assist in transitioning from one time-shifted content block to another for a given unshifted content. Such staggering also distributed the load on the network associated with initiating delivery of content blocks. Further, the time-shifted content blocks need not correspond to a given program or a standard programming time slot. Although the time-shifted content blocks may correspond to a program or run for a given programming block, such as during prime time or between 8 pm and 10 pm, the time-shifted content blocks may correspond to random or offset time intervals, such as 6:15 pm to 9:15 pm and 9:15 pm to 12:15 am, wherein transitions from one time-shifted content block to another occur mid-program.

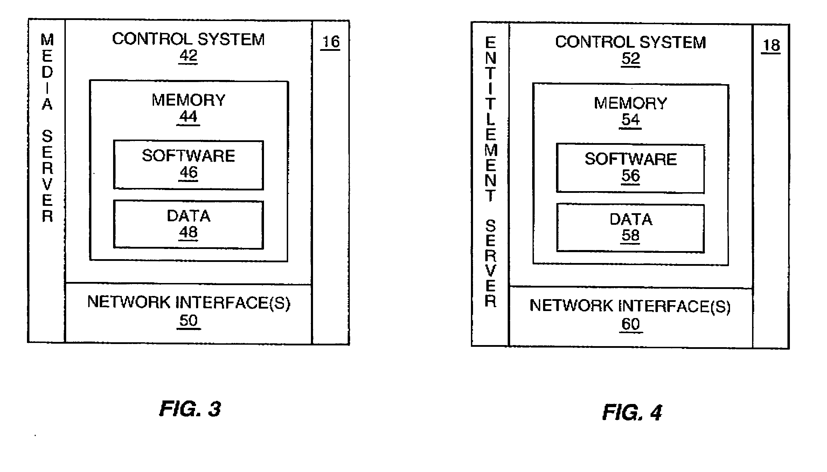

With reference to Figure 3, a block diagram of a media server 16 is illustrated. The media server 16 may include a control system 42 having sufficient memory 44 for the requisite software 46 and data 48 to operate as described above. The control system 42 may also be associated with one or more network interfaces 50 to facilitate communications with other entities in the network architecture 10.

With reference to Figure 4, a block diagram of an entitlement server 18 is illustrated. The entitlement server 18 may include a control system 52 having sufficient memory 54 for the requisite software 56 and data 58 to operate as described above. The control system 52 may also be associated with one or more network interfaces 60 to facilitate communications with other entities in the network architecture 10.

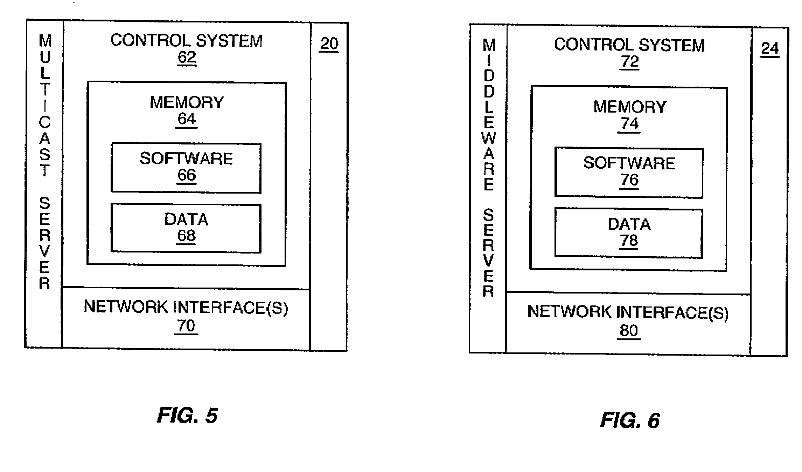

With reference to Figure 5, a block diagram of a multicast server 20 is illustrated. The multicast server 20 may include a control system 62 having sufficient memory 64 for the requisite software 66 and data 68 to operate as described above. The control system 62 may also be associated with one or more network interfaces 70 to facilitate communications with other entities in the network architecture 10.

With reference to Figure 6, a block diagram of a middleware server 24 is illustrated The middleware server 24 may include a control system 72 having sufficient memory 74 for the requisite software 76 and data 78 to operate as described above. The control system 72 may also be associated with one or more network interfaces 80 to facilitate communications with other entities in the network architecture 10.

## Claims

1. A method comprising:
• receiving unshifted content from a content source, the unshifted content being streaming media content delivered over a packet network;
• generating a plurality of time-shifted content blocks from the unshifted content, wherein content for each of the plurality of time-shifted content blocks is essentially the unshifted content; and
• delivering each of the plurality of time-shifted content blocks at different times according to a defined delivery schedule, wherein the unshifted content is effectively time-shifted for delivery to subscribers.

2. The method of claim 1 comprising:
• assigning each of the plurality of time-shifted content blocks a unique channel; and
• delivering said time-shifted content blocks as streaming content for the unique channel.

3. The method of claim 1 comprising:
• delivering the time-shifted content blocks toward a multicast server, which allows subscribers to join a multicast group for a given one of the plurality of time-shifted content blocks; and
• at said multicast server, delivering the given one of the plurality of time-shifted content blocks to user clients of the subscribers.

4. The method of claim 1 comprising:
• delivering the time-shifted content blocks to an entitlement server; and
• at said entitlement server, encrypting the plurality of time-shifted content blocks;
• forwarding a corresponding plurality of encrypted time-shifted content blocks toward a multicast server; and
• sending entitlement information to at least one user device, the entitlement information providing sufficient information for the at least one user device to decrypt at least one of the plurality of encrypted time-shifted content blocks.

5. The method of claim 1 further comprising: receiving time-shifting instructions defining the plurality of time-shifted content blocks and time shifts associated with the plurality of time-shifted content blocks.

6. The method of claim 1 further comprising: creating and delivering, to a user client, program guide information identifying channels and related information corresponding to the plurality of time-shifted content blocks.

7. The method of claim 1 comprising:
• at a video on demand server, generating the plurality of time-shifted content blocks from the unshifted content; and
• providing video on demand content to subscribers.

8. The method of claim 1 wherein delivering each of the plurality of time-shifted content blocks further comprises streaming content for each of the plurality of time-shifted content blocks for delivery to the subscribers at defined time intervals.

9. The method of claim 8 comprising: streaming the content for each of the plurality of time-shifted content blocks for delivery to the subscribers who are within a given time zone.

10. The method of claim 8 comprising: streaming the content for each of the plurality of time-shifted content blocks for delivery to the subscribers who are in different times zones, such that a different one of the plurality of time-shifted content blocks is provided for each of the different time zones.

11. The method of claim 1 comprising: delivering one after another, for a given channel, consecutive time-shifted content blocks to provide continuous delivery of content for the subscribers.

12. The method of claim 1 comprising: staggering in time a beginning of consecutive time-shifted content blocks for different channels.

13. The method of claim 1 wherein the unshifted content is broadcast television content.

14. The method of claim 1 comprising: using unicast sessions to deliver the time-shifted content blocks to the subscribers.

15. A system comprising:
• at least one network interface; and
• a control system associated with the at least one network interface and adapted to:
• receive unshifted content from a content source, the unshifted content being streaming media content delivered over a packet network;
• generate a plurality of time-shifted content blocks from the unshifted content, wherein content for each of the plurality of time-shifted content blocks is essentially the unshifted content; and
• deliver each of the plurality of time-shifted content blocks at different times according to a defined delivery schedule, wherein the unshifted content is effectively time-shifted for delivery to subscribers.
